Europäisches Patentamt

**European Patent Office**

Office européen des brevets

(11) Veröffentlichungsnummer: **0 212 195 B1**

(12) **EUROPÄISCHE PATENTSCHRIFT**

(45) Veröffentlichungstag der Patentschrift:
28.03.90

(21) Anmeldenummer: **86109264.1**

(22) Anmeldetag: **07.07.86**

(51) Int. Cl.⁴: **B23Q 11/08, B05B 1/06**

(54) **Vorrichtung zum Unterdrücken der Staubentwicklung und zum Ableiten von Spanmaterial an der Bearbeitungsstation einer Werkzeugmaschine.**

(30) Priorität: **16.07.85 CH 3090/85**
            **17.06.86 CH 2458/86**

(43) Veröffentlichungstag der Anmeldung:
**04.03.87 Patentblatt 87/10**

(45) Bekanntmachung des Hinweises auf die Patenterteilung:
**28.03.90 Patentblatt 90/13**

(84) Benannte Vertragsstaaten:
**AT BE CH DE FR GB IT LI LU NL SE**

(56) Entgegenhaltungen:
**WO-A-83/01747**
**CH-A- 208 032**
**CH-A- 241 054**
**DE-A- 1 646 196**
**DE-C- 254 235**
**FR-A- 1 305 478**
**GB-A- 696 198**
**LU-A- 59 759**
**US-A- 2 574 865**

(73) Patentinhaber: **Starrfräsmaschinen AG,**
**Seebleichestrasse 61, CH-9400 Rorschacherberg(CH)**

(72) Erfinder: **Ameseder, Anton, Löwengartenstrasse 11,**
**CH-9400 Rorschach(CH)**

(74) Vertreter: **EGLI-EUROPEAN PATENT ATTORNEYS,**
**Horneggstrasse 4, CH-8008 Zürich(CH)**

## Beschreibung

Die Erfindung betrifft eine Vorrichtung nach dem Oberbegriff des Patentanspruchs 1.

Es ist bekannt, daß bei der spanenden Bearbeitung von Werkstücken aus bestimmten Materialien eine erhebliche Staubentwicklung auftritt, die nicht nur für das Bedienungspersonal lästig und gesundheitsschädigend ist, sondern auch Störungen an den Maschinen und eine Verschmutzung der Räumlichkeiten bewirkt. Ein solches Material ist beispielsweise Graphit, das zur Herstellung von Elektroden verschiedenster Form für den Einsatz an Funkenerodiermaschinen dient. Die Werkstücke aus Graphit werden zweckmäßig durch spanende Bearbeitung geformt, beispielsweise durch Fräsen.

Zum Schutz des Bedienungspersonals und der Maschinen gegen den bei der Bearbeitung von Graphit entstehenden Schwebestaub ist es bekannt, transparente Abdeckhauben zu verwenden. Da jedoch Werkstücke verschiedenster Form gefertigt werden, müssen die Abdeckhauben für jeden Auftrag neu den Werkstücken angepaßt werden. Sie behindern jedoch die Sicht und den Bearbeitungsraum. Zudem gestattet die ständige Veränderung der Werkzeugbewegung, vor allem dessen Vertikalbewegung, keine feste Abdeckung zwischen dem Werkzeug und dem Werkstück, ohne daß dadurch eine beträchtliche Unfallgefahr entsteht. Auch die Verwendung elastischer Abdeckungen, beispielsweise elastische Abdeckhauben, können die genannten Nachteile nicht verringern.

Zur Verbesserung dieses bekannten Verfahrens ist ein weiteres Verfahren bekanntgeworden, das vor allem bei der Trockenbearbeitung von Graphitwerkstücken angewandt wird. Hierbei werden starke Industrie-Staubsauger eingesetzt, mit denen die anfallenden Späne und der Staub im Bereich der Bearbeitungsstelle, z.B. an der Stelle des Fräsereingriffes, abzusaugen versucht wird. Der ständige Wechsel des Werkzeug- bzw. Fräsereingriffes während dem Bearbeiten verunmöglicht jedoch eine befriedigende Entsorgung. Zudem versperren die voluminösen Saugleitungen mit der Saugdüse den Bearbeitungsraum. Muß die Saugdüse von Hand nachgeführt werden, stellt dies keine befriedigende Lösung dar und steigert zudem die Unfallgefahr. Bei zwei- und mehrspindligen Bearbeitungsmaschinen ist diese Art der Entsorgung wegen des damit verbundenen großen Aufwandes an Material und Platz noch problematischer. Werden zusätzlich Absaughauben eingesetzt, fällt der Wirkungsgrad derselben erheblich und normale Absauggeräte genügen da nicht mehr, so daß die Verstaubung der Räumlichkeiten der Umgebung noch stärker wird.

Es ist weiter bekannt, die mit den genannten Nachteilen versehene Trockenbearbeitung durch eine Naßbearbeitung zu ersetzen. Da an den spanenden Bearbeitungsmaschinen immer Kühlmitteleinrichtungen vorhanden sind, ist es naheliegend, diese für das Unterdrücken der Staubentwicklung zu benützen, wobei lediglich die Kühlflüssigkeit gewechselt wird. Auf diese Weise kann zwar ein großer Teil der anfallenden Späne mit dem Kühlmedium gebunden werden, jedoch kann auch bei diesem Verfahren die Entstehung von Schwebestaub nicht verhindert werden. Besonders nachteilig ist hierbei, daß der in der Maschine eingebaute Kühlmittelkreislauf durch den bei der Zerspanung entstehende Staub und das Spanmaterial verschmutzt wird. Die Reinigung der Maschine nach der Bearbeitung stellt eine zeitraubende Arbeit dar, wobei sich insbesondere bei der Bearbeitung von Graphitwerkstücken der schwarze, schmierige Schlamm nur mit großem Aufwand von der Maschine entfernen läßt. Die Maschine selbst und die Räumlichkeiten bleiben jedoch von einem schwarzen Staubschleier überzogen, der nur mit Mühe entfernt werden kann.

Aus der GB-A 696 198 ist ein Verfahren und eine Vorrichtung für das Zuführen einer Kühlflüssigkeit zu einem Schneidwerkzeug mittels eines Ringkanals bekannt, der als Flüssigkeitsvorhang das Werkzeug umgibt. Weitere Flüssigkeit wird durch kreisförmig angeordnete Bohrungen auf die Innenseite des als Topfscheibe ausgebildeten Werkzeugs zugeführt. Diese Flüssigkeit wird durch das rotierende Werkzeug an die Innenseite des Flüssigkeitsvorhangs geschleudert und dort aufgefangen. Mittels einer an einem Ringkanal angeordneten Ringdüse wird dem austretenden Flüssigkeitsvorhang eine tangentiale Geschwindigkeitskomponente erteilt. Dies hat zur Folge, daß an winkligen Kanten des Werkzeugs Partien sind, die von der schräggerichteten Strömung nicht bestrichen werden und somit dort eine Lücke im Flüssigkeitsvorhang besteht, durch den gegebenenfalls Staub entweichen kann. Weiter ist aus CH-A 241 054 eine Schleifmaschine mit Flüssigkeitskühlung bekannt, bei welcher mittels Ringdüsen mindestens ein Flüssigkeitszylinder um das Schleifwerkzeug erzeugt wird. Da auch in diesem Fall der Strömung im Flüssigkeitszylinder eine tangentiale Geschwindigkeitskomponente überlagert ist, können auch hier nichtabgedeckte Partien am Werkstück entstehen, durch die Staubmaterial entweichen kann.

Die Erfindung liegt in dem Gebiet der Naßbearbeitung und es ist ihre Aufgabe, eine Vorrichtung der eingangs beschriebenen Art so auszugestalten, daß der an der Bearbeitungsstelle entstehende Schwebestaub vollständig eingefangen, von der verwendeten Flüssigkeit abgebunden und mit dem Spanmaterial weggeführt wird, ohne jedoch den Raum um die Bearbeitungsstelle einzuengen und ohne die Sicht auf das Werkzeug und das Werkstück während der Bearbeitung sowie den Zugriff zur Bearbeitungsstelle zu behindern.

Diese Aufgabe wird gemäß der Erfindung durch die kennzeichnenden Merkmale des Patentanspruchs 1 gelöst.

Die Erfindung ist in der Zeichnung in zwei Ausführungsbeispielen dargestellt und nachfolgend beschrieben. Es zeigen:

Fig. 1 einen Vertikalschnitt einer Vorrichtung zum Unterdrücken der Staubentwicklung bei der Bearbeitung, die am Spindelkasten oder auf dem Pinolenflansch einer Werkzeugmaschine angeordnet und eine im Spindelkasten gelagerte Werkzeugspindel mit einer Ringleitung umgibt, und

Fig. 2 eine Vorrichtung ähnlich derjenigen wie in Fig. 1, jedoch mit einer die Werkzeugspindel umgebenden doppelten Ringleitung.

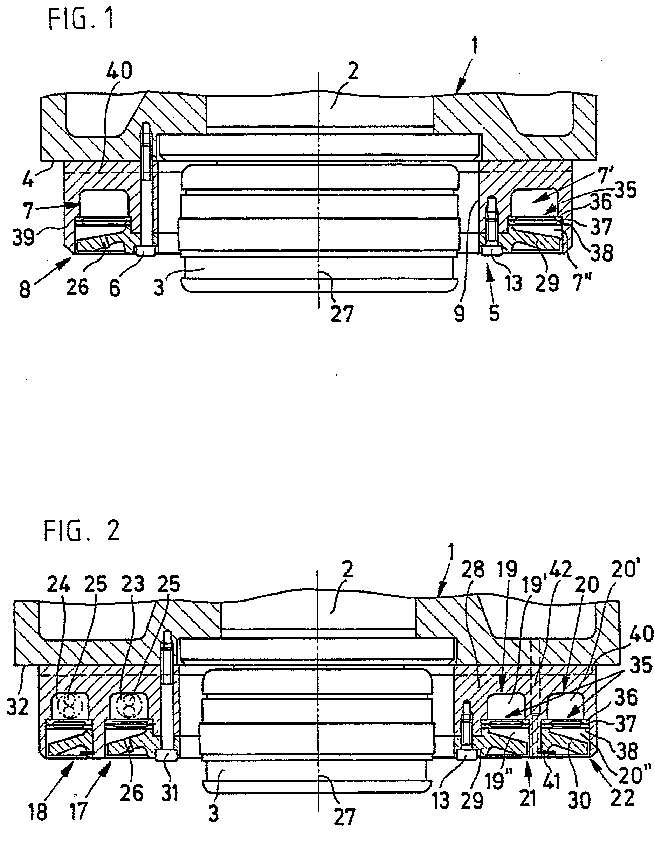

In Fig. 1 ist mit 1 ein teilweise dargestellter Spindelkasten bzw. ein Pinolenflansch einer Werkzeugmaschine bezeichnet, in der eine rotierende Arbeitsspindel 2 gelagert und mit einer Spannvorrichtung 3 ausgerüstet ist, mit welcher ein Bearbeitungswerkzeug (nicht dargestellt) eingespannt werden kann. Die Spannvorrichtung 3 kann eine beliebige Ausführungsform sein, die nicht näher beschrieben wird, da sie für die Erläuterung der Erfindung nicht erforderlich ist.

An der Stirnseite des Spindelkastens 1 ist eine Ringleitung 5 mittels Schrauben 6 befestigt, die die Spindel 2 mit der Spannvorrichtung 3 umgibt.

Die Ringleitung 5 mit dem einen annähernd rechteckförmigen Querschnitt aufweisenden Kanal 7 mündet in einen Ringspalt 8, der eine endlose Ringdüse bildet, durch welche das Fluid in einen zusammenhängenden Fluidvorhang ausströmen kann. Dieser Fluidvorhang kann beliebig groß sein und eine Höhe bis zu etwa 500 mm aufweisen.

Die Ringleitung 5 ist gegen die Bearbeitungsstelle hin offen, wobei an deren spindelseitigem Schenkel ein Ringdeckel 29 durch die Schrauben 6 und durch weitere Schrauben 13' befestigt ist. Der außenumfangseitige Schenkel 39 der Ringleitung 5 und der freie Rand des Ringdeckels 29 bilden den Ringspalt 8.

Wegen des geschlossenen Fluidvorhanges wird die gesamte Staubentwicklung aufgefangen und in dem Fluid gebunden. Gleichzeitig werden auch die anfallenden Späne weggeschwemmt. Da das Fluid durchsichtig ist, kann der Bearbeitungsvorgang unbehindert beobachtet werden. Falls einmal ein Zugriff an die Bearbeitungsstelle erforderlich ist, kann auch dieser unbehindert durch den Fluidvorhang hindurch vorgenommen werden. Der geschlossene Raum bleibt unabhängig von der Form des Werkstückes immer erhalten. Dies setzt allerdings voraus, daß das Fluid aus der Ringdüse geschlossen und senkrecht zur Spindelachse 27 erfolgt. Wird nur eine Zuleitung zu der Ringdüse bzw. zu den Ringdüsen vorgesehen, kann die Richtung des austretenden Fluidstroms auch tangential zur Spindelachse verlaufen. Dadurch können am Werkstück Bereiche, z.B. bei steilen Flanken, entstehen, die vom Flüssigkeitsstrom nicht mehr abgedeckt werden, so daß dort Staub austreten kann.

Werden anstelle eines einzigen Fluidvorhangs zur Bildung von zwei konzentrischen Fluidvorhängen zwei Kanäle mit Ringdüsen vorgesehen, kann dieser noch austretende Staubaustritt problemlos vermieden werden, aber nur dann, wenn die Zuleitung in dem einen Kanal einen dem tangentialen Ausfluß im andern Kanal entgegengesetzten schrägen Ausfluß bewirkt. Die Neigung der beiden austretenden Flüssigkeitsströme ist dann entgegengesetzt, so daß auch bei Werkstücken mit scharfen Ecken und steil abfallenden Kanten ein völliger Abschluß des Innenraumes erreicht wird. Der Nachteil, daß trotz der vorgesehenen Gleichrichter in der Zuleitung die aus der Ringdüse austretende Fluidströmung nicht parallel, sondern schräg zur Spindelachse 27 verläuft, kann zwar durch diese Anordnung kompensiert werden, allerdings unter Inkaufnahme eines etwas erhöhten Aufwandes.

Jedoch kommt noch hinzu, daß das zur Bildung des Fluidvorhanges verwendete Fluid die bei der Bearbeitung anfallenden Staubpartikel aufnimmt und wegführt. Zwar wird das verbrauchte Fluid in einer Reinigungsanlage gereinigt, jedoch ist es nicht möglich, die Reinigung selbst mit größtem Aufwand so weit zu treiben, daß die gesamten Partikel aus dem Fluid entfernt werden. Dies bedeutet, daß im Fluid immer ein, wenn auch geringer Anteil an Materialpartikeln enthalten ist. Diese Materialpartikel setzen sich an verschiedenen Stellen ab, insbesondere im Bereich des Ringkanales und können beim Losbrechen von Partikelhaufen in dem Ringspalt hängenbleiben und dadurch die Bildung eines einwandfrei geschlossenen Fluidvorhanges verhindern.

Wird jedoch in dem Kanal 7 ein Fluiddurchlaß 35 angeordnet, der als scheibenförmiger Kreisring ausgebildet ist und den Kanal 7 in einen oberen, etwa rechteckigen Teilkanal 7' und in einen unteren, etwa keilförmigen Teilkanal 7" unterteilt, kann dieser Mangel vermieden werden.

Der Fluiddurchlaß 35 kann je nach Bedarf der jeweiligen Ausführungsform der Vorrichtung angepaßt werden. Er weist einlaufseitig einen Umlenkring 36 auf, der die Aufgabe hat, die vorhandene Ringströmung so zu beeinflussen, daß der Fluidaustritt an dem Ringspalt 8 parallel zur Spindelachse 27 erfolgt. Der Umlenkring 36 kann eine Ringscheibe sein, die mit einer Lochung oder einem Schaufelgitter versehen ist. Weiter kann der Fluiddurchlaß 35 einen Filterring 37 enthalten, der noch vorhandene Materialpartikel im Fluid zurückhält. Diese setzen sich vor allem in dem oberen Teilkanal 7' wegen der dort herrschenden Zentrifugalwirkung an der außenseitigen Kanalwand ab und bilden einen Belag, aus dem gröbere Teilchen ausbrechen können, die sich in dem Ringspalt 8 festsetzen und so den Fluidvorhang aufreißen. Das Filterelement 37 kann aus Sieben bestehen, von denen zwei und mehr Lagen mit unterschiedlicher, in Strömungsrichtung abnehmender Maschenweite zwischen 0,8 mm und 0,3 mm, vorzugsweise zwischen 0,65 mm und 0,4 mm, eingelegt werden. Austrittsseitig kann am Fluiddurchlaß 35 noch ein Gleichrichtungsring 38 vorgesehen werden, der zusätzlich für die Fluidströmung parallel zur Spindelachse 27 sorgt. Dieser ist als gelochte Ringscheibe oder als Schlitzgitter ausgebildet. Der Fluiddurchlaß 35 wird spindelseitig durch den Ringdeckel 29 festgeklemmt und damit in seiner Lage gehalten.

Die in Fig. 2 dargestellte Vorrichtung weist zwei nebeneinanderliegende Kanäle 19, 20 auf, die einen etwa rechteckförmigen Querschnitt aufweisen. Beim Ausströmen eines Fluides aus den Ringspalten 21, 22 werden zwei geschlossene ringförmige Fluidvorhänge gebildet, die den innerhalb der beiden Fluidströme liegenden Raum vollständig gegen die Umgebung abschließen. Für jeden der Kanäle 19, 20 ist eine Mündung 23, 24 einer Zuleitung mit Gleichrichtungseinbauten 25 vorhanden, durch welche das Fluid den Ringleitungen 17, 18 zugeleitet wird. Zweckmäßig liegen die Mündungen 23, 24 auf gegenüberliegenden Seiten. Auch bei der Ringleitung 5 nach Fig. 1 kann ebenfalls eine solche Zuleitung mit Gleichrichtungseinbauten vorgesehen werden (nicht dargestellt).

Bei der Ringleitung 7 in Fig. 1 und bei der Ringleitung 17 in Fig. 2 sind auf der dem Spindelkasten 1 abgewandten Seite einige Düsen 26 (nur eine Düse sichtbar) angeordnet, die schräg gegen die Spindelachse 27 gerichtet sind und der Kühlung des Werkzeuges dienen.

Die Ringleitung 17 in Fig. 2 setzt sich aus einem Ring 28 mit den beiden Kanälen 19, 20 und zwei die Kanäle abschließende Ringdeckel 29, 30 zusammen, wobei zwischen dem freien Rand der Ringdeckel 29, 30 und der benachbarten außenumfangseitigen Kanalwand die Ringspalten 21, 22 gebildet werden. Der Ring 28 ist durch die Schrauben 31 an der Stirnseite 32 des Spindelkastens 1 befestigt, während der Ringdeckel 29 mit den Schrauben 13 und der Ringdeckel 30 durch einen Spannring 41 befestigt ist.

Bei der Ausführung nach Fig. 2 werden in den Kanälen 19, 20 der Ringleitung 17 dieselben Fluiddurchlässe 35 eingebaut wie im Kanal 7 der Ausführung nach Fig. 1. Durch die Fluiddurchlässe 35 werden obere, etwa rechteckige Teilkanäle 19', 20' und untere, etwa keilförmige Teilkanäle 19", 20" gebildet. Die Fluiddurchlässe 35 weisen in Fig. 2 dieselben Teile auf wie in Fig. 1, d.h. einen Umlenkring 36, ein Filterelement 37 und einen Gleichrichtungsring 38 und sind durch die Ringdeckel 29, 30 in ihrer Lage gehalten.

Bei der Ausführungsform nach Fig. 1 wird durch den Fluiddurchlaß 35 gewährleistet, daß das Fluid aus der Ringdüse parallel zur Spindelachse 27 ausströmt. Gleichzeitig werden im Fluiddurchlaß 35 im Fluid befindliche Materialteilchen zurückgehalten.

Bei der Ausführungsform nach Fig. 2 kann ein etwaiger Staubaustritt noch zuverlässiger vermieden werden, da dann auch Materialteilchen, die wegen ihrer großen Bewegungsenergie den inneren Fluidvorhang durchqueren, soweit gebremst werden, daß sie sicher im äußeren Fluidvorhang abgefangen werden.

Bei der Bearbeitung von Graphit wird der durch den Fluidvorhang eingefangene Graphitstaub nicht in die Kühlmittelanlage der Werkzeugmaschine, sondern in eine getrennt davon aufgestellte Anlage, z.B. der Firma Purolator, geleitet. In dieser wird das rückfließende, mit Materialstaub und Materialteilchen beladene Medium kontinuierlich gereinigt und dann der Anlage durch eine Pumpe wieder zugeführt. Wenn auch durch eine solche Anlage eine stetige Reinigung des Fluids erreicht wird, ist es nicht möglich, alle, insbesondere die kleinsten Materialteilchen vollständig aus dem Fluid zu entfernen. Etwaige, von diesen Materialteilchen herrührende Störungen können mit Hilfe der Fluiddurchlässe 35 zuverlässig vermieden werden. Zur Erreichung eines geschlossenen Fluidvorhanges kann bei den Vorrichtungen nach Fig. 1 und 2 der Ringspalt 8 bzw. 21, 22 mit einer Breite von 0,25–0,4 mm ausgeführt werden, wobei als Fluid eine bekannte Kühlmittelflüssigkeit verwendet werden kann, die etwa 97% Wasser und etwa 3% eines die Rostbildung verhindernden Zusatzes enthält und unter einem Druck von zwei und mehr bar stehen kann.

Varianten der beschriebenen Vorrichtungen bestehen darin, daß mehr als eine Zuleitung verwendet werden kann, wodurch die Zentrifugalwirkung im oberen Teilkanal vermindert wird und gegebenenfalls auf den Umlenkring 36 verzichtet werden kann.

Da die Fluidvorhänge an ihren Außenflächen Luft mitreißen, hat dies zur Folge, daß im Innenraum derselben der Luftdruck abnimmt. Dadurch fällt der Fluidvorhang nicht mehr senkrecht, sondern zieht sich zunehmend konisch zusammen. Um dies zu vermeiden, werden in Fig. 1 ein oder mehr Radialkanäle 40 in der Ringleitung vorgesehen. Bei der Vorrichtung nach Fig. 2 sind außer den Radialkanälen 40 noch Abzweigungsleitungen 42 vorgesehen, mit denen der Raum zwischen zwei Fluidvorhängen belüftet werden kann. Werden diese Belüftungskanäle geschlossen, kann bei dem Zusammenziehen der Fluidvorhänge auf den vollständigen Abschluß des Innenraumes bzw. der Innenräume des Fluidvorhanges bzw. der Fluidvorhänge geschlossen werden.

Die beschriebenen Vorrichtungen können nicht nur bei Fräsmaschinen mit einer oder mehreren Spindeln, sondern auch bei anderen Werkzeugmaschinen verwendet werden, wobei außer Graphit andere spröde staubbildende Materialien, z.B. keramische Materialien, unter Vermeidung einer Staubentwicklung bearbeitet werden können. Bei Maschinen mit einer in einer Pinole gelagerten Spindel können die Ringleitungen entweder am Spindelkasten oder an der Pinole angeordnet sein.

## Patentansprüche

1. Vorrichtung zum Unterdrücken der Staubentwicklung und zum Ableiten von Spanmaterial an der Bearbeitungsstation einer Werkzeugmaschine während der spanenden Bearbeitung von Werkstücken, insbesondere von Werkstücken aus Graphit, mittels eines Fluids, welches unter Bildung mindestens eines zusammenhängenden, zylinderförmigen Fluidvorhangs aus der Ringdüse jeweils eines Ringkanals eintritt, wobei der Fluidvorhang den entstehenden Staub bindet und zusammen mit den Spänen von der Bearbeitungsstelle abführt, dadurch gekennzeichnet, daß jeder Ringkanal (7, 19, 20) sich aus zwei konzentrisch aneinander anliegenden, ringförmigen Teilkanälen (7' 7", 19', 19", 20', 20") zusammensetzt, welche durch einen als Umlenk-, Filter- und/oder Gleichrichter-Element ausgebildeten Fluiddurchlaß (35) voneinander getrennt sind.

2. Vorrichtung nach Anspruch 1, dadurch gekennzeichnet, daß der Fluiddurchlaß (35) im Weg des Fluides von der Zuleitung in die Ringdüse (8, 21, 22) angeordnet und fluiddurchlässig ist, wobei die Ringdüse an den auf der Ablaufseite des Fluiddurchlasses liegenden Teilkanal (7", 21", 22") angeordnet ist.

3. Vorrichtung nach Anspruch 1, dadurch gekennzeichnet, daß zwei Ringkanäle (19, 20) in einem durch eine gemeinsame Wand getrennten Ring (28) angeordnet und mit je einem Fluiddurchlaß (35) versehen sind.

4. Vorrichtung nach Anspruch 1, dadurch gekennzeichnet, daß der Fluiddurchlaß (35) aus scheibenförmigen Kreisringen (36, 37, 38) zusammengesetzt ist, die einzeln, zum Teil oder zusammen der Fluidumlenkung, der Fluidfiltrierung und/oder der Fluidgleichrichtung dienen.

5. Vorrichtung nach Anspruch 1, dadurch gekennzeichnet, daß der aus der Ringdüse (8, 21, 22) austretende Fluidstrom innenseitig eine Belüftung aufweist.

6. Vorrichtung nach Anspruch 5, dadurch gekennzeichnet, daß für die Belüftung des innerhalb des Fluidvorhangs befindlichen Raumes an dem Ring (28) mindestens ein radialer Kanal (40) vorgesehen ist, welcher bei zwei und mehr Fluidvorhängen durch Abzweigleitungen (42) ergänzt ist, die in den zwischen den Fluidvorhängen liegenden Zwischenraum münden.

## Claims

1. Device for suppressing dust development and for leading away swarf material at the working station of a machine tool during cutting working of workpieces, particularly workpieces of graphite, by means of a fluid which under the formation of at least one coherent cylindrical shaped fluid curtain emerges from the annular slot in each case of an annular channel, wherein the liquid curtain binds the dust arising and feeds it together with the away swarf from the work station, characterised in that each annular channel (7, 19, 20) is composed of two concentric adjacently lying annular partial channels (7', 7", 19', 19", 20', 20") which are separated from one another by a fluid passage (35) constructed as diverter, filter and/or compensator element.

2. Device according to Claim 1 characterised in that the fluid passage (35) is arranged in the path of the fluid from the infeed into the annular nozzle (8, 21, 22) and is fluid permeable, wherein the annular nozzle is arranged on the partial channel (7", 21", 22") lying on the outflow side of the fluid passage.

3. Device according to Claim 1, characterised in that two annular channels (19, 20) are arranged in a ring (28) separated by a common wall and each are provided with a fluid passage (35).

4. Device according to Claim 1, characterised in that the fluid passage (35) is put together of disc shaped circular rings (36, 37, 38) which individually serve partly or together for fluid diversion, fluid filtering and/or fluid compensation.

5. Device according to Claim 1 characterised in that the fluid stream flowing out from the annular nozzle (8, 21, 22) has interior ventilation.

6. Device according to Claim 5, characterised in that for ventilating the space located within the fluid curtain there is provided on the ring (28) at least one radial channel (40) which in the case of two or more fluid curtains is supplemented by branch conduits (42) which debouch to the interspace lying between the fluid curtains.

## Revendications

1. Dispositif pour diminuer la diffusion de la poussière et pour décharger des coupeaux qui viennent d'un poste d'usinage d'une machine-outil, pendant l'usinage par enlèvement de copeaux de pièces, en particulier de pièces en graphite, au moyen d'un fluide entrant en formant au moins à chaque fois un rideau de fluide continu, de forme cylindrique, à partir d'une buse annulaire appartenant chaque fois à un canal annulaire, le rideau de fluide liant la poussière apparaissant et l'évacuant conjointement avec les copeaux hors du poste d'usinage, caractérisé en ce que chaque canal annulaire (7, 19, 20) se compose de deux canaux partiels (7', 7", 19', 19", 20', 20") placés concentriquement l'un contre l'autre, séparés l'un de l'autre au moyen d'un passage de fluide réalisé sous la forme d'un élément de déviation, de filtration et/ou redresseur.

2. Dispositif selon la revendication 1, caractérisé en ce que le passage de fluide (35) est disposé dans la trajectoire du fluide allant de la conduite d'alimentation à la buse annulaire (8, 21, 22) et qu'il est perméable au fluide, la buse annulaire étant disposée sur le canal partiel (7", 21", 22") situé du côté évacuation du passage de fluide.

3. Dispositif selon la revendication 1, caractérisé en ce que deux canaux annulaires (19, 20) sont disposés dans un anneau (28) séparé par une paroi commune et pourvus chacun d'un passage de fluide (35).

4. Dispositif selon la revendication 1, caractérisé en ce que le passage de fluide (35) se compose d'anneaux circulaires (36, 37, 38) en forme de disques, servant individuellement, en partie ou conjointement, à la déviation du fluide, à la filtration du fluide et/ou au redressement du fluide.

5. Dispositif selon la revendication 1, caractérisé en ce que le courant de fluide sortant de la buse annulaire (8, 21, 22) présente côté intérieur une aération.

6. Dispositif selon la revendication 5, caractérisé en ce que, pour l'aération de l'espace se trouvant à l'intérieur du rideau de fluide, il est prévu sur l'anneau (28) au moins un canal radial (40) complété, dans le cas de deux rideaux de fluide et plus, par des conduites de dérivation (42) débouchant dans l'espace intermédiaire situé entre les rideaux de fluide.

FIG. 1

FIG. 2